# EUROPEAN PATENT SPECIFICATION

(11) **EP 4 383 106 B1**
(45) Date of publication and mention of the grant of the patent: **29.07.2026**
(21) Application number: 22306812.3
(22) Date of filing: 07.12.2022
(51) Int. Cl.: G06F 21/55, G06F 21/52, G06F 7/58, H04L 9/00, H04L 9/06

(54) **SHUFFLING AND SLIDING SUBGROUP TECHNIQUES TO PROCESS**
SHUFFLING- UND SLIDING-UNTERGRUPPENTECHNIKEN ZUR VERARBEITUNG
TECHNIQUES DE RÉARRANGEMENT ET DE GLISSEMENT DE SOUS-GROUPE À TRAITER

(43) Date of publication of application: 12.06.2024
(73) Proprietor: NXP B.V., 5656 AG Eindhoven (NL)
(72) Inventor: Venelli, Alexandre, 31023 Toulouse Cedex 1 (FR); Dassance, Francois, 31023 Toulouse Cedex 1 (FR)
(74) Representative: Krott, Michel

(56) References cited:
- EP-A1- 3 379 765
- EP-B1- 3 591 889

## Description

### TECHNICAL FIELD

The present disclosure relates generally to data processing and to mechanisms for shuffling an order of data blocks in a data processing system.

### BACKGROUND

Data processing systems can be subject to side-channel attacks that aim to obtain sensitive data. These attacks monitor the behavior (e.g., execution timing, power consumption) of a target device such as a microcontroller to gather information that is used to extract the sensitive data. In some cases, to protect against such attacks, the target device implements countermeasures by manipulating the processing of the sensitive data. These countermeasures may include, for example, shuffling techniques that randomize the order of executing data operations associated with the data. However, sometimes these countermeasures can have a noticeable impact on system performance or memory, which are often critical in embedded systems.

From EP 3 591 889 B1 a shuffling mechanism for shuffling an order of data blocks in a data processing system is known.

From EP 3 379 765 A1 a permutation generator circuit is known allowing to randomize the execution order of operations by generating a permutation.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 shows a data processing system in accordance with various embodiments.
FIG. 2 is a method flowchart of a shuffling and sliding subgroup mechanism in accordance with some embodiments.
FIG. 3 is a flowchart illustrating an example of generating a shuffled order for a plurality of data blocks according to the shuffling and sliding subgroup mechanism illustrated in FIG. 2 in accordance with some embodiments.
FIGs. 4 and 5 show examples of a first iteration for forming a first subgroup and of a second iteration for forming a second subgroup, respectively, in accordance with some embodiments.
FIGs. 6 and 7 show various examples for forming a shuffled order using the shuffling and sliding subgroup mechanism in accordance with various embodiments.

### DETAILED DESCRIPTION

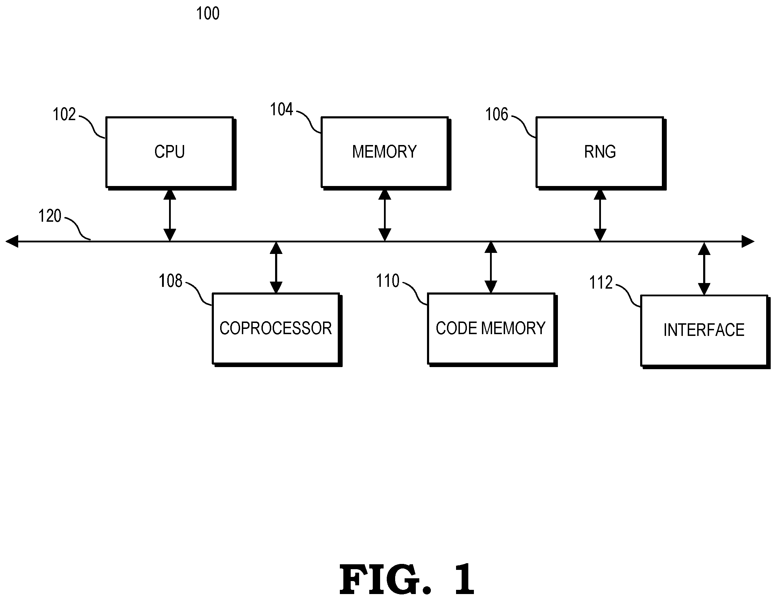

One countermeasure employed against side-channel attacks is known as shuffling, wherein independent data operations associated with a plurality of data blocks in a data block array are reordered from an initial order to a shuffled order for execution. Shuffling is an effective countermeasure against side-channel attacks when there are a substantial number of data operations (also referred to as processing operations or operations) associated with the data blocks to rearrange due to the higher quantity of potential permutations in the shuffled order. However, conventional shuffling countermeasures against side-channel attacks have numerous drawbacks, including requiring a precomputed table to implement the shuffling techniques, strict conditional requirements on the number of data blocks to implement the shuffling techniques, and central processing unit (CPU) instructions that are highly inefficient or computationally complex (e.g., instructions including division or remainder). These drawbacks of conventional shuffling techniques increase the computational complexity and the memory requirements for implementation and provide fewer possible permutations, thereby reducing the resistance to side-channel attacks. FIGs. 1-7 describe techniques that provide a shuffling and sliding subgroup mechanism that can be securely implemented in memory constrained microcontrollers in a data processing system, thereby delivering an improved resistance against side-channel attacks with little or no memory storage overhead compared with conventional shuffling countermeasures.

The shuffling and sliding subgroup techniques described herein include an on-the-fly sliding subgroup mechanism applied to a random starting index algorithm with a random step size to generate a shuffled order that includes all of the plurality of data blocks from a data block array regardless of size. For example, for any given data block array with a plurality of data blocks in an initial order, randomly selecting one of the data blocks as a first entry in the shuffled order and randomly selecting a step size to add other data blocks as subsequent entries to the shuffled order will likely fail to include all of the data blocks in the shuffled order. This is due to the high probability that randomly selecting a step size without any additional conditional requirements (e.g., having the step size be coprime with the total number of the plurality of data blocks) will only add a fraction (i.e., subgroup) of the plurality of blocks before the next entry to be added to the shuffled order is a repeat entry. The shuffling and sliding subgroup method described herein recognizes this and shifts the next entry by one index position to continue to add additional entries to the shuffled order in multiple iterations until all of the data blocks have been added. The data operations associated with the shuffled order of data blocks (which includes one or more subgroups generated in each iteration) are executed whilst the shuffle order is generated. This ensures that the operations associated with the plurality of data blocks are executed in a random order regardless of the size of the data block array and the randomly selected step size. This increases the possible number of permutations for executing operations associated with the data blocks, thus providing greater resistance to side-channel attacks.

To illustrate, the shuffling and sliding subgroup technique includes receiving a plurality of data blocks in an initial order and selecting two random values (a first value and a second value) based on the number, N, of the plurality of data blocks. The first value, E, indicates a starting index position in the plurality of data blocks to be selected as a first entry in the shuffled order and the second value, S, indicates a step size for adding additional entries to the shuffled order. In some embodiments, the technique includes performing a first iteration to generate a first subgroup of the shuffled order. This first iteration includes selecting a data block as the first entry of the first subgroup based on the first value, E, and adding additional data blocks as subsequent entries to the first subgroup utilizing a step size based on the second value, S. This process of adding subsequent entries to the first subgroup continues until the next entry to be added is a data block that has already been added to the first subgroup, i.e., the next entry would be a repeat entry. Once this repeat entry is detected, the technique includes determining whether all of the plurality of data blocks have been added in the first subgroup which would indicate that all the associated data operations have been executed. If all the data blocks have been added in the first subgroup (i.e., the shuffled order up to this point), then the process is terminated. If all of the data blocks from the plurality of data blocks have not been added yet, the next entry is shifted by one index position, and the data block corresponding to this shifted index position is set as the first entry for a second subgroup in a second iteration. The second iteration then generates the rest of the second subgroup based on the data block at the shifted index position and the step size based on the second value, S. This process of performing additional iterations to generate additional subgroups is repeated until all of the data blocks in the plurality of data blocks have been added to a respective subgroup. By detecting the next entry is a repeat and shifting the starting index position by one index position, the shuffling and sliding subgroup technique ensures that all of the data blocks are added as entries to the shuffled order in a randomized manner regardless of the selected step size and data block array size.

The techniques described herein have numerous advantages compared with conventional shuffling mechanisms. For example, these advantages include reducing or eliminating memory storage overhead, improving computational efficiency, and providing stronger resistance to side-channel attacks due to a higher number of random permutations.

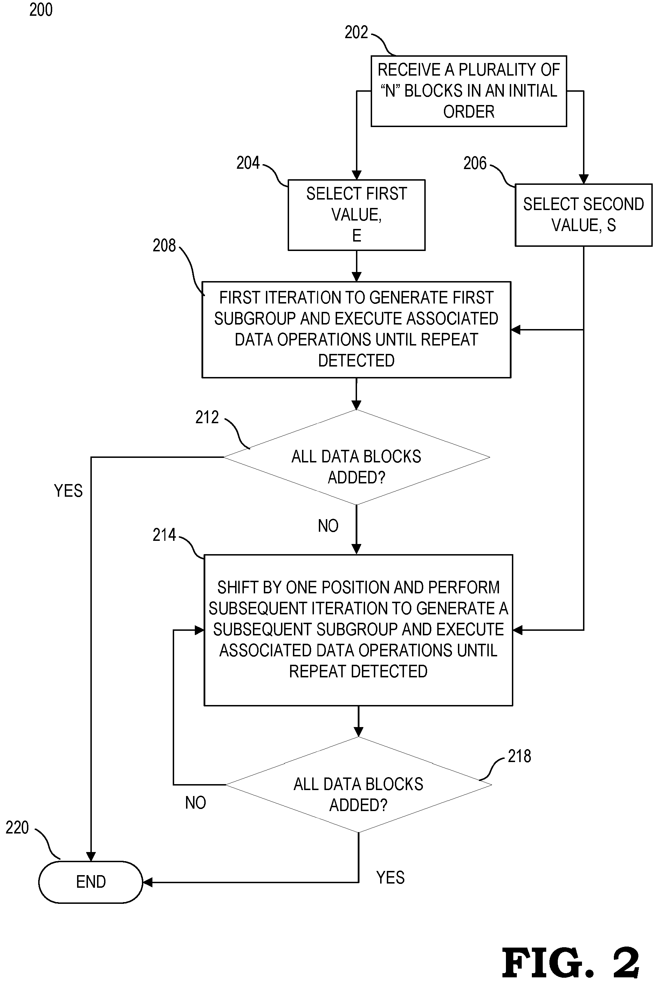

FIG. 1 illustrates a data processing system 100 in accordance with an embodiment. Data processing system 100 includes a system bus 120, central processing unit (CPU) 102, memory 104, random number generator (RNG) 106, coprocessor 108, code memory 110, and interface 112. In some embodiments, system bus 120 is any type of system bus for communicating data and instructions. In some embodiments, interface 112 is communicably coupled to the system bus 120 and is configured to allow data processing system 100 to transmit and receive data with one or more other devices located outside of the data processing system 100. In some embodiments, CPU102 is bi-directionally connected to system bus 120 and is one or more of any type of processor, or processor core, such as a microprocessor, microcontroller, digital system processor, or the like. In some embodiments, memory 104 is bi-directionally connected to system bus 120 and is any suitable type of volatile or non-volatile memory for storing instructions in, for example, an instruction queue for CPU 102. In some embodiments, RNG 106 is bi-directionally connected to system bus 120 and is one or more of any type of RNG or pseudo-RNG for generating the random numbers (e.g., the first value, E, and the second value, S) used in the disclosed embodiments. In some embodiment, CPU 102 is used to control the methods for shuffling a plurality of data blocks into a shuffled order by selecting first and second values for generating a plurality of subgroups in multiple iterations with a shift of one index position value between the iterations and forming the shuffled order based on the generated subgroups. In some embodiments, coprocessor 108 is bi-directionally connected to system bus 120 and is any type of data processor or processor core. For example, coprocessor 108 includes one or more microprocessor, microcontroller, digital system processor, or the like. In some embodiments, one or both of CPU 102 and coprocessor 108 is used for implementing the methods described in FIGS. 2-7 and/or the algorithms described in one or more of algorithms Shuffle 1, Shuffle 2, or Shuffle 3. In some embodiments, CPU 102 or coprocessor 108 is characterized as a secure processor or includes a secure element for securely storing or processing information. Accordingly, in some embodiments, the term "secure processor" refers to one or both of CPU 102 and/or coprocessor 108 in data processing system 100. In some embodiments, code memory 110 is bi-directionally connected to system bus 120 and is any type of volatile or non-volatile memory for storing data and/or instructions. In some embodiments, memories 104 and 110 are implemented as portions of the same memory array. The described shuffling and sliding subgroup techniques may be implemented in data processing system 100 as hardware, software, or a combination of hardware and software. In some embodiments, the hardware may be implemented as electrical or electronic circuits, which can be collectively referred to as "a circuit arrangement" or "circuitry."

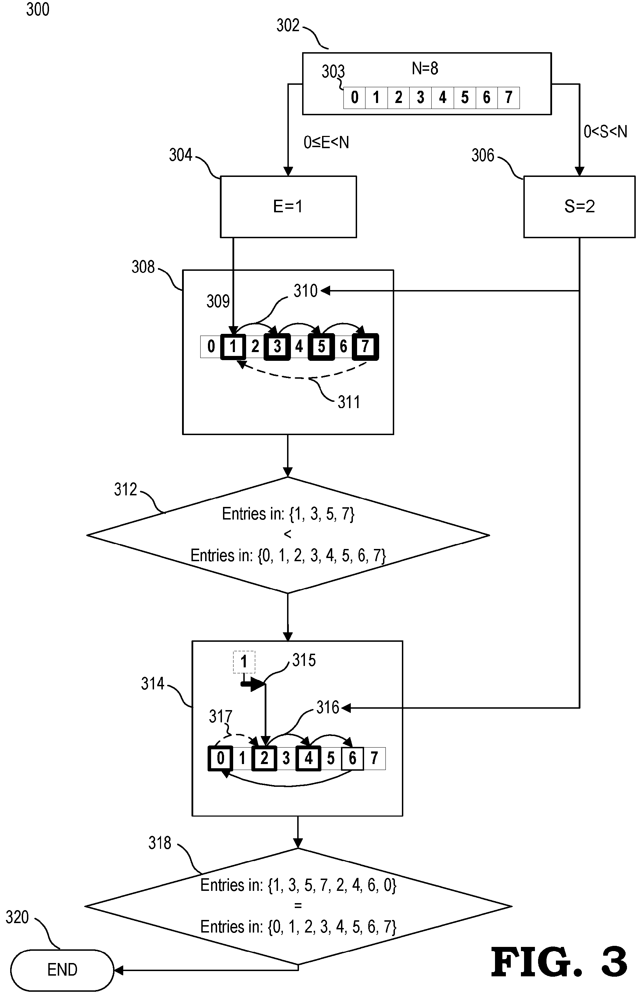

FIG. 2 shows a flowchart 200 describing a shuffling and sliding subgroup method according to various embodiments. The shuffling and sliding subgroup method includes shuffling the plurality of data blocks in a data block array from an initial order into a plurality of subgroups to form a shuffled order. In some embodiments, one or both of CPU 102 or coprocessor 108 (i.e., a secure processor) of FIG. 1 performs the shuffling and sliding subgroup method shown in flowchart 200 for executing operations associated with data stored in a memory, such as memory 104, or associated with data received from an external source via interface 112. In some embodiments, the shuffling and sliding subgroup method shown in flowchart 200 requires little or no memory storage overhead or conditional branches, thereby reducing the memory resources and the computational complexity for implementation. Thus, the shuffling and sliding subgroup method described in flowchart 200 provides a strong resistance to side-channel attacks in memory constrained systems. For purposes of this explanation, reference is also made to FIG. 3 illustrating an accompanying flowchart 300 that shows an example of the shuffling and sliding subgroup method described in FIG. 2.

At 202, in some embodiments, the method includes receiving a data block array with a plurality of data blocks, N , where N is any positive integer. For example, a secure processor in a data processing system (such as CPU 102 or coprocessor 108 in data processing system 100 of FIG. 1) can receive the data block array from an external source or retrieve the data block array from an internal source (such as memory 104 in data processing system 100 of FIG. 1). In some embodiments, the plurality of data blocks, N, is in an initial order with each of the plurality of data blocks having an index position in the initial order. Referring to 302 in FIG. 3, the data block array 303 includes eight data blocks (N=8), where each data block has a corresponding index position (0, 1, 2, 3, 4, 5, 6, 7). While eight data blocks are shown in FIG. 3, it is appreciated that this amount is for purposes of simplifying this explanation and may be scalable to larger quantities.

Referring back to FIG. 2 at 204, in some embodiments, the method includes the secure processor selecting a first value, E. For example, in some embodiments, a secure processor such as CPU 102 or coprocessor 108 in data processing system 100 in FIG. 1 selects the first value based on an output from RNG 106. In some embodiments, the secure processor uses the first value, E, to set the first entry of the shuffled order. In some embodiments, the secure processor selects the first value, E, at least in part based on the number of the plurality of data blocks, N, in the data block array. For example, referring to 304 in FIG. 3, the first value, E, is a random integer between 0 (inclusive) and N (non-inclusive), i.e., 0 ≤ E < N, and corresponds to any of the data blocks with one of the eight index positions in the initial order for data block array 303. In this example illustrated in FIG. 3 at 304, the secure processor selects the first value to be 1 (i.e., E=1).

Referring back to FIG. 2 at 206, in some embodiments, the method includes the secure processor selecting a second value, S. For example, in some embodiments, a secure processor such as CPU 102 or coprocessor 108 in data processing system 100 in FIG. 1 selects the second value based on an output from RNG 106. In some embodiments, the secure processor uses the second value, S, to set the step size for adding subsequent entries to the shuffled order. In some embodiments, the secure processor selects the second value, S, at least in part based on the quantity of the data blocks in the plurality of data blocks, N, in the data block array. Referring to 306 in FIG. 3, the second value, S, is a random integer between 0 (non-inclusive) and N (non-inclusive), i.e., 0<S<N, and corresponds to a step size to add subsequent entries to the shuffled order. In some embodiments, the addition of subsequent entries is based on modular reduction and can be described by the equation: Next Entry= Previous Entry + S *mod* (N). As illustrated in FIG. 3 at 306, the secure processor selects the second value to be 2 (i.e., S=2).

Contrary to conventional shuffling countermeasures based on random starting index and random step size, the shuffling and sliding subgroup techniques described herein do not require further restrictions to select the first and second values (E and S, respectively) other than that the first and second values must be a positive integer value less than or equal to the total number of data blocks in the data block array. For example, some conventional shuffling countermeasures require that the step size (second value, S) be co-prime with the number of the plurality of data blocks (N) in the data block array. This condition is not a requirement for the shuffling and sliding subgroup method described herein, which therefore reduces the computational complexity for implementation and increases the possible number of permutations. For example, as shown in FIG. 3, the second value (S=2) and the number of plurality of data blocks (N=8) are not coprime.

Referring back to FIG. 2 at 208, in some embodiments, the method includes the secure processor performing a first iteration to generate a first subgroup in the shuffled order and executing associated data operations until a repeat is detected. For example, in some embodiments, a secure processor such as CPU 102 or coprocessor 108 in data processing system 100 in FIG. 1 generates the first subgroup in the shuffled order by performing the first iteration based on the first value, E, and the second value, S. In some embodiments, this includes the secure processor selecting a data block as the first entry of the first subgroup based on the first value, E, and adding additional entries to the first subgroup based on the second value, S. In some embodiments, the data blocks added during this first iteration 208 are collectively referred to as the "first subgroup." The secure processor adds data blocks to this first subgroup until a repeat entry to the first subgroup is detected. For example, in some embodiments, this repeat entry corresponds to the first entry of the first subgroup. Referring to FIG. 3 at 308, this first iteration to generate the first subgroup is illustrated. The secure processor sets the initial entry of the first subgroup based on the first value (E=1) and is shown by arrow 309. In this example, this first entry corresponds to data block 1. Then, using the second value (S=2) to set the magnitude of the step size at two shown by 310 (only the first step from 1 to 3 is marked 310 for clarity purposes), the secure processor adds subsequent entries (i.e., data blocks 3, 5, and 7) to the first subgroup. In some embodiments, the step size is based on modular reduction to account for wrapping around the end of the plurality of data blocks. As shown by dashed arrow 311, the secure processor detects a repeat entry when the next entry to be added to the first subgroup is data block 1. Once the secure processor detects this repeat, the secure processor stops the addition of data blocks as entries to the first subgroup.

Referring back to FIG. 2, after detecting that the next entry in the first iteration would be a repeat entry in 208, then the secure processor determines whether all of the data blocks have been added to the shuffled order 212. If all of the data blocks have been added to the shuffled order (YES at 212), then this signals that all of the associated data operations have been executed or are in queue to be executed and the process is terminated at 220. If all of the data blocks have not yet been added to the shuffled order (NO at 212), then the secure processor shifts the next entry by one index position and sets the data block corresponding to this shifted index position as the first entry of the subsequent subgroup and executes the associated data operations until a repeat is detected in 214. For example, in some embodiments, the first entry of the second subgroup is a data block that is shifted by one index position value compared with the first entry in the first subgroup. Then, the secure processor adds the rest of the entries in the subsequent subgroup based on the data block corresponding to this shifted index position and the step size based on the second value, S. In some embodiments, in each subsequent iteration, the secure processor generates a corresponding subgroup with a first entry that is shifted by one index position compared to the first entry in the previously generated subgroup. In some embodiments, in each subsequent iteration, the secure processor continues to add data blocks as entries to its corresponding subgroup until it detects a repeat for a next entry to be added to the corresponding subgroup. Referring to FIG. 3 at 312, the data blocks that were added to the shuffled order in the first iteration 308 are compared to the total number of data blocks of the plurality of data blocks in 302. In this case, the number of entries generated in the first iteration is four (i.e., four entries of first subset {1, 3, 5, 7}) which is less than the entries in the plurality of data blocks of 302 (i.e., eight data blocks {0, 1, 2, 3, 4, 5, 6, 7,}. In other words, the number of entries in the shuffled order (composed of the first subgroup from the first iteration 308 up to this point) is not equal to the entries in the plurality of data blocks in 302. Since the secure processor determines that not all the data blocks have been added to the shuffled order at 312, the secure processor proceeds to block 314. In block 314, since the secure processor detected that data block 1 would have been the repeat entry in the previous iteration (i.e., first iteration in block 308), the secure processor shifts the index position of this detected repeat entry by one value as shown by arrow 315 to data block 2. Accordingly, the secure processor sets data block 2 as the first entry of the second subgroup. Then, the secure processor adds subsequent entries to the second subgroup based on the step size of the second value (S = 2) 316. For example, the subsequent entries in the second subgroup are the data blocks 4, 6, and 0. As shown by dashed arrow 317, the secure processor detects a repeat entry when the next entry to be added to the second subgroup is the data block at the index position 2. Once the secure processor detects this repeat entry, the secure processor stops the addition of data blocks as entries to the second subgroup.

Referring back to FIG. 2 at 218, in some embodiments, the secure processor then determines whether all of the data blocks of the plurality of data blocks have been added to subgroups in the shuffled order. In some embodiments, the secure processor makes this determination of whether all of the data blocks have been added based on whether the total number of entries in the generated subgroups that make up the shuffled order corresponds to the total number of data blocks in the plurality of data blocks, N. In other embodiments, the secure processor makes this determination of whether all of the data blocks have been added based on detecting that the data block at the next shifted entry corresponds to a data block that is already in one of the generated subgroups, e.g., the next shifted entry corresponds to a data block that is an entry of the first generated subgroup. Once the secure processor determines that all of the data blocks have been added as entries to the shuffled order in one of the generated subgroups (YES at 218), which indicates that all of the associated data operations have been executed or are scheduled for execution, the process of adding data blocks to the shuffled order is terminated 220.

Referring to FIG. 3 at 318, the secure processor determines that all of the plurality of data blocks have been added to the shuffled order. For example, the shuffled order of data blocks based on the first subgroup generated in 308 and the second subgroup generated in 314 is {1, 3, 5, 7, 2, 4, 6, 0} and has eight entries. This is equal to the total number of data blocks received at 302. Therefore, the secure processor determines that all of the data blocks have been added to the shuffled order, and the secure processor terminates the addition of data blocks to the shuffled order at 320. As a note, the first subgroup generated in the first iteration 308 includes a first subset of data blocks {1, 3, 5, 7} and the second subgroup generated in the second iteration 312 includes a second subset of data blocks {2, 4, 6, 0}. Each of the first subset and the second subset include only unique entries. That is, based on the techniques described herein, there are no repeat entries in the first subgroup 317 and the second subgroup 318.

As shown by FIGs. 2 and 3, by assembling the entries of the first subgroup and then the elements of the shifted second subgroup, a secure processor implementing the shuffling and sliding subgroup method described herein generates a random, shuffled order including every data block of the data block array. Furthermore, the secure processor can repeat this process for additional iterations based on the size of the data block array and the step size. Accordingly, the shuffling and sliding subgroup method ensures that all of the data blocks of the plurality of data blocks are added to the shuffled order without having to compute the greatest common divisor of the number of the plurality of data blocks (N) and the step size (S) or without having to select a step size (S) coprime with the number of the plurality of data blocks (N). Additionally, the data operations associated with the data blocks are executed whilst the shuffled order is generated. This reduces the computational complexity for implementation and increases the number of possible permutations.

In some embodiments, the secure processor performs the shuffling and sliding subgroup method by executing instructions according to algorithm Shuffle 1, shown below. For example, a secure processor of a data processing system (such as CPU 102 or coprocessor 108 in data processing system 100 of FIG. 1) retrieves instructions for Shuffle 1 from a memory (such as code memory 110, memory 104, or other embedded memory) and executes Shuffle 1 to shuffle the order of executing data operations associated with a data block array in a randomized manner that is more resistant to side-channel attacks.

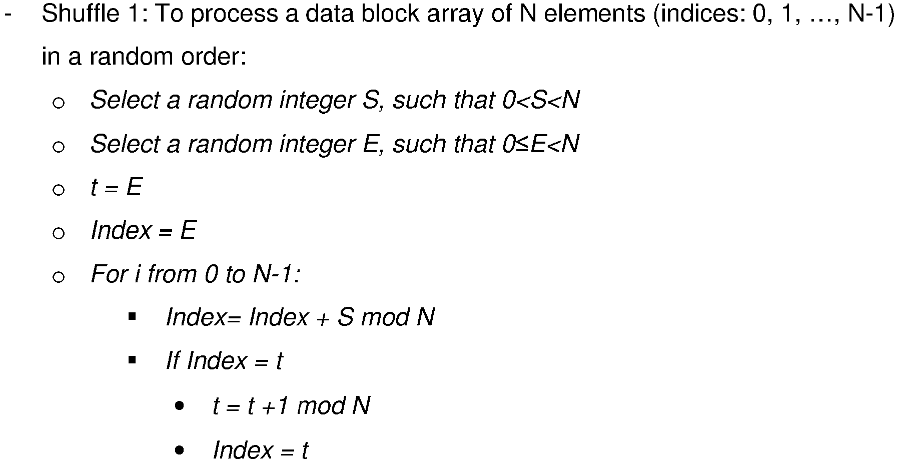

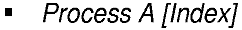

In this algorithm, t is the first entry of the current subgroup. In some embodiments, the condition "*If Index = f*" is true when the current computed *Index* is equal to the first entry of the current subgroup. In some embodiments, this indicates that every unique entry of the current subgroup has been added, and the next subgroup needs to be shifted by one position. Shifting the next subgroup by one position and keeping the step size the same ensures that the next subgroup will include entries that did not belong to the previous subgroup. This process is repeated until all of the elements (N) of the data block array have been added to respective subgroups, which together constitute the shuffled order.

The shuffled order is a pseudo-random order defined by the random numbers E and S that are selected between 0 and N. Accordingly, the shuffling and sliding subgroup method described herein is able to produce a shuffled order with a full range of permutations defined by the expression N*(N-1). This wide range of possible permutations strongly protects against side-channel attacks.

In some embodiments, after detecting that a next entry to be added to a respective subgroup is a repeat entry, the secure processor can perform the shifting of one index position (e.g., described at block 214 of FIG. 2 and illustrated by arrow 315 in block 314 of FIG. 3) to generate each subsequent subgroup in the positive direction or in the negative direction. That is, the shift of the index position is either +1 or -1. For example, the shift 315 shown in FIG. 3 is a +1 shift from data block 1 to data block 2. However, this shift can instead be a -1 shift from data block 1 to data block 0. This feature of selecting either a positive or negative shift, in effect, doubles the number of possible permutations. In some embodiments, the shuffling and sliding subgroup method based on this additional feature of selecting between a positive index shift or a negative index shift is described according to the algorithm Shuffle 2, shown below. In some embodiments, a secure processor of a data processing system (such as CPU 102 or coprocessor 108 in data processing system 100 of FIG. 1) retrieves instructions for the algorithm Shuffle 2 from a memory (such as code memory 110, memory 104, or other embedded memory) and executes Shuffle 2 to shuffle the order of executing data operations associated with a data block array in a randomized manner that is more resistant to side-channel attacks.

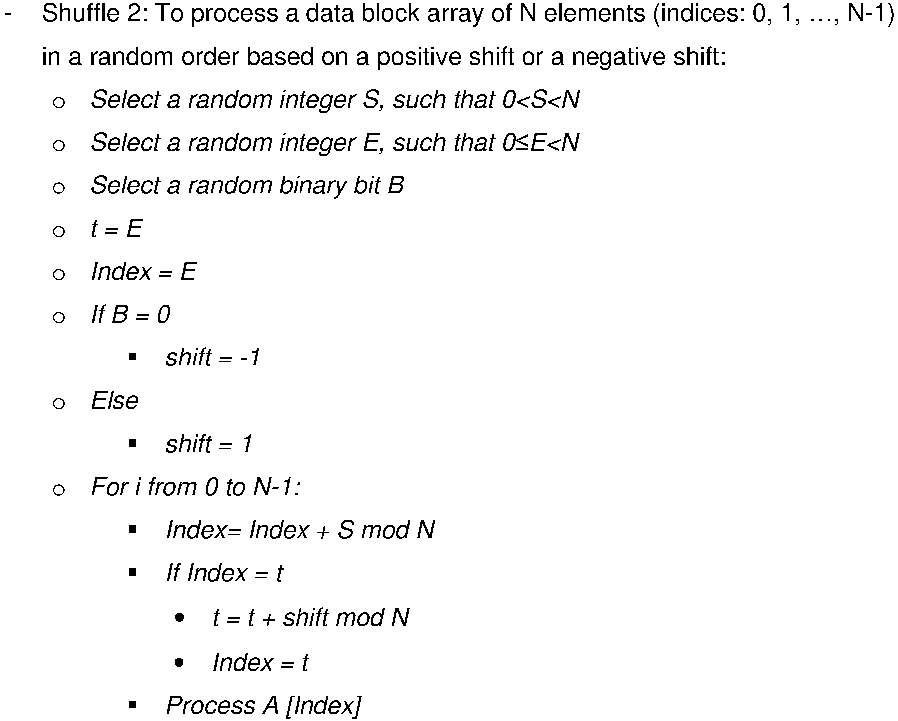

In this Shuffle 2 algorithm, the introduction of the random binary bit, B, provides the secure processor with an extra parameter that doubles the possible number of permutations of the shuffled order. In other words, because this random binary bit, B, adds an additional option for the direction of the index position shift for generating subsequent subgroups, the number of total possible permutations of the shuffled order is, in effect, doubled. This increases the resistance to side-channel attacks.

In some embodiments, the modular reductions shown in Shuffle 1 and Shuffle 2 can be replaced since the number to reduce is the result of an addition with small parameters. Thus, the modular reductions can be replaced by conditional subtractions. For example, in some embodiments, the shuffling and sliding subgroup method without modular reduction is described by the algorithm Shuffle 3, shown below. In some embodiments, a secure processor of a data processing system (such as CPUE 102 or coprocessor 108 in data processing system 100 of FIG. 1) retrieves instructions for the algorithm Shuffle 3 from a memory (such as code memory 110, memory 104, or other embedded memory) and executes Shuffle 3 to shuffle the order of executing data operations associated with a data block array in a randomized manner that is more resistant to side-channel attacks.

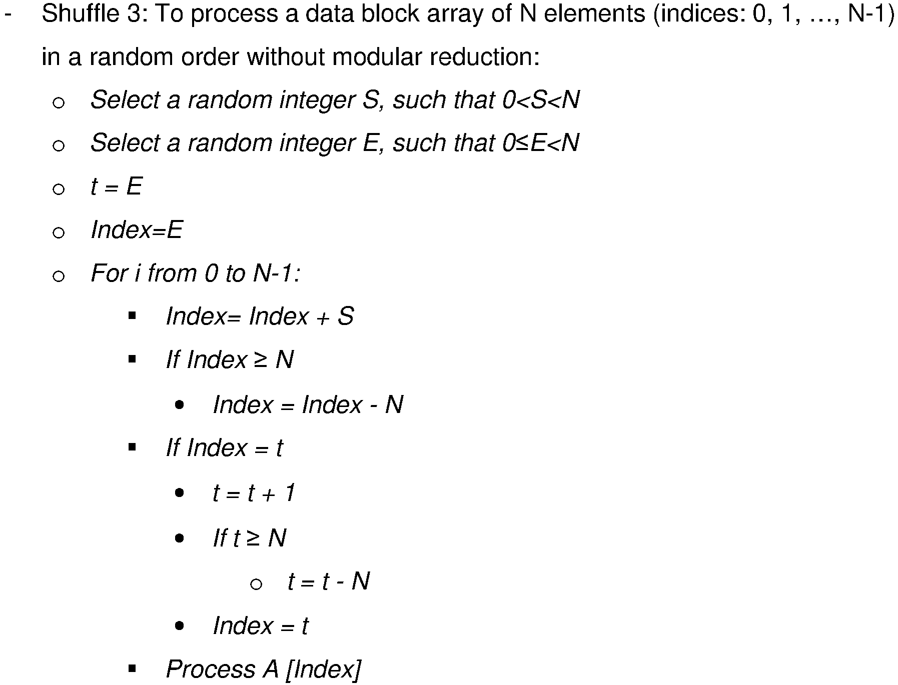

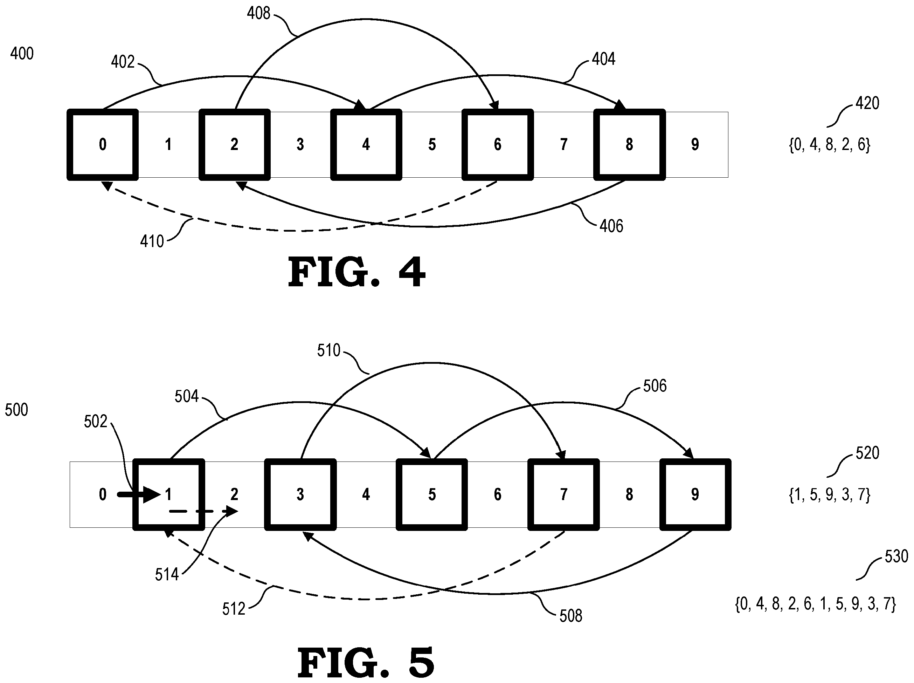

FIG. 4 shows a diagram 400 illustrating the process by which a secure processor, such as CPU 102 or coprocessor 108 in data processing system 100 of FIG. 1, generates a first subgroup 420 in a shuffled order for executing operations in a randomized manner to increase the resistance to side-channel attacks according to various embodiments. In this example, the plurality of data blocks (N) in the data block array is ten, i.e., N = 10. Each of the data blocks are marked by a corresponding index position (0, 1, ..., 9). In the example shown in FIG. 4, the shuffling and sliding subgroup method utilizes a first value (E) of zero and a second value (S) of four. It is appreciated that the values for N, E, and S are non-limiting in nature and selected for clarity purposes of the ensuing explanation.

The secure processor selects the first entry of the first subgroup 420 as the data block with an index position corresponding to the first value (E=0), i.e., the first entry is data block 0. Then, the secure processor adds subsequent entries to the first subgroup 420 based on the second value (S=4) indicating the step size and executes the data operations associated with the data blocks as they are added to the first subgroup 420. In this manner, the first subgroup 420 includes a first data block with an index position corresponding to the first value and additional data blocks that are offset from the first data block with step sizes based on the second value. To illustrate, the second entry of the first subgroup is based on the step shown by arrow 402 and corresponds to data block 4. The third entry of the first subgroup is based on the step shown by arrow 404 and corresponds to data block 8. The fourth entry of the first subgroup is based on the step shown by arrow 406 and corresponds to data block 2. The fifth entry of the first subgroup is based on the step shown by arrow 408 and corresponds to data block 6. The next entry would be based on the step shown by 410. However, the secure processor detects this next entry would be a repeat entry since data block 0 is the first entry of the first subgroup 420. Accordingly, upon this detection of a potential repeat entry to the first subgroup, the secure processor closes the first subgroup 420 with a first subset of data blocks of {0, 4, 8, 2, 6} in the shuffled order and, since all of the data blocks have not yet been added to the shuffled order, triggers a shift in an index position to generate a subsequent (in this case, second) subgroup.

FIG. 5 shows a block diagram 500 illustrating the process by which a secure processor, such as CPU 102 or coprocessor 108 in data processing system 100 of FIG. 1, generates a second subgroup 520 in the shuffled order after the first subgroup shown in FIG. 4 for executing operations in a randomized manner to increase the resistance to side-channel attacks. Thus, FIG. 5 shows a second iteration after the first iteration of the shuffling and sliding subgroup method described in FIG. 4.

After detecting the repeat entry in the previous iteration shown at 410 in FIG. 4, the secure processor shifts the index position of the first entry of the second subgroup by one index position with respect to this detected repeat entry. This shift is illustrated by arrow 502. Since the detected repeat entry from the previous iteration corresponds to data block 0, the index position is shifted by one position, in this case +1, to data block 1. Accordingly, this shifted index position sets the corresponding data block (in this case, data block 1) to be the first entry in the second subgroup 520. Then, the secure processor uses the same step size (S=4) that it used in the first iteration shown in FIG. 4 to add data blocks as subsequent entries to the second subgroup 520 and executes the data operations associated with the data blocks as they are added to the second subgroup 520. In this manner, the second subgroup 520 includes a first data block with an index position corresponding to the first value shifted by one position and additional data blocks that are offset from the data block at this shifted position with step sizes based on the second value. To illustrate, the second entry of the second subgroup is based on the step shown by arrow 504 and corresponds to data block 5. The third entry of the second subgroup is based on the step shown by arrow 506 and corresponds to data block 9. The fourth entry of the second subgroup is based on the step shown by arrow 508 and corresponds to data block 3. The fifth entry of the second subgroup is based on the step shown by arrow 510 and corresponds to data block 7. The next entry would be based on the step shown by 512. However, the secure processor detects this next entry to be a repeat entry since data block 1 is the first entry of the second subgroup 520. Accordingly, upon this detection of a potential repeat entry to the second subgroup, the secure processor closes the second subgroup 520 with a second subset of data blocks of {1, 5, 9, 3, 7}.

After closing the second subgroup, the secure processor determines that all of the plurality of data blocks in the data block array (data blocks 0, 1, ..., 9) have been added in subgroups (either in the first subgroup 420 or the second subgroup 520) and terminates the process of adding data blocks to the shuffled order, which is based on the first and second generated subgroups and is shown at 530. In some embodiments, the secure processor makes this determination based on the total number of elements in the generated subgroups being equal to the number of the plurality of data blocks in the data block array. In other embodiments, the secure processor makes this determination based the next shifted index position (corresponding to dashed arrow 514) corresponding to a data block that has already been added to a subgroup (in this case, data blocks 2 as the fourth entry in the first subgroup 420). It is appreciated that shuffled order 530 is one possible permutation of many possible permutations covered by the shuffling and sliding subgroup method described herein. For example, in some embodiments, shuffled order 530 is one possible permutation of 10*(10-1) = 90 possible permutations according to the algorithms described in Shuffle 1 or Shuffle 3. In other embodiments, shuffled order 530 is one of 180 possible permutations covered by the shuffling and sliding subgroup method of the present disclosure when the additional feature of shifting the index position in either the positive or the negative direction is implemented (e.g., according to the algorithm described in Shuffle 2). Thus, based on this high number of possible permutations, the shuffling and sliding subgroup mechanism shown in FIGs. 4 and 5 increases the resistance to side-channel attacks.

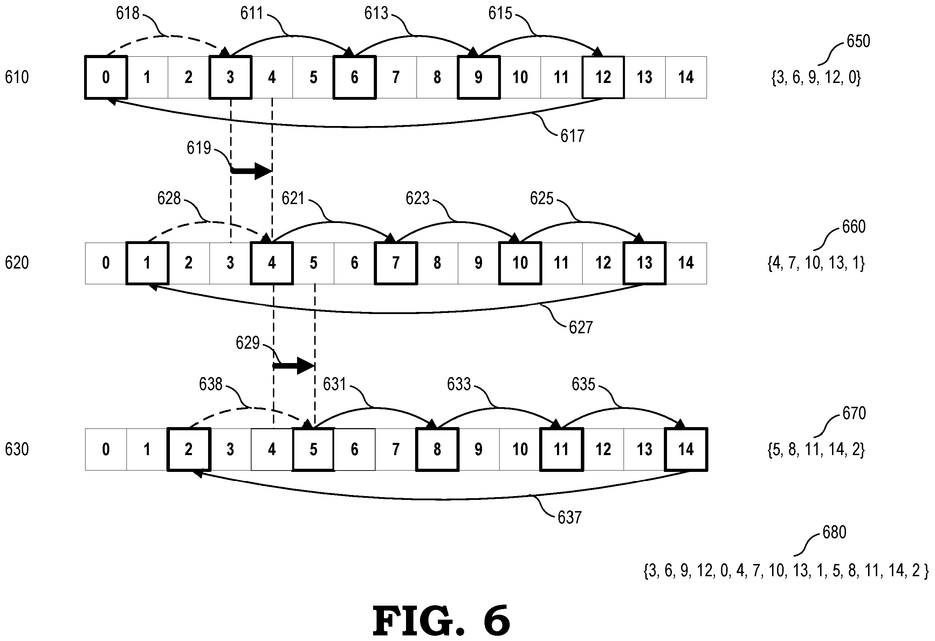

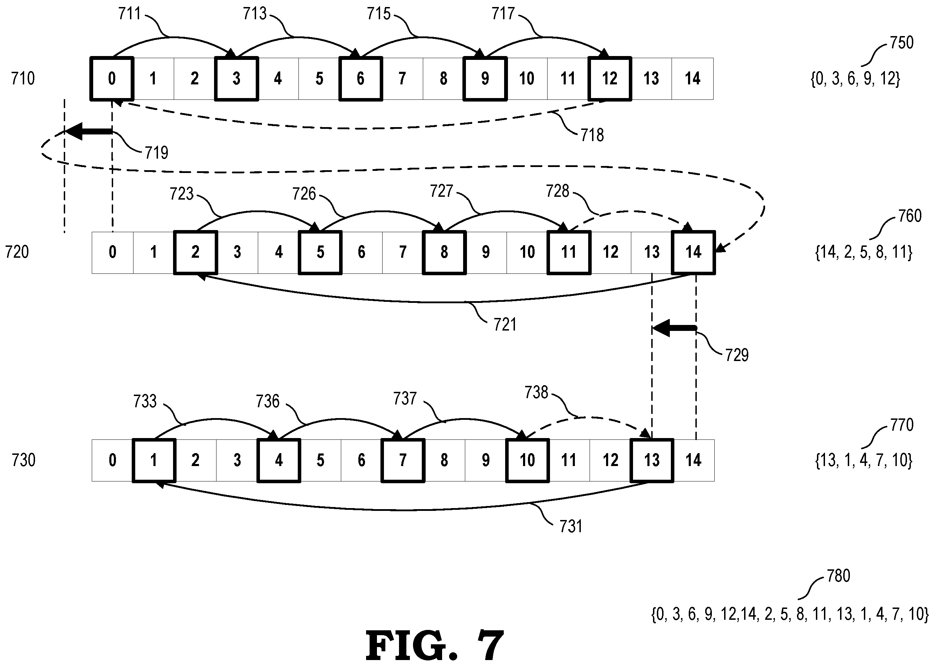

FIGs. 6 and 7 show additional examples of how a secure processor, such as CPU 102 or coprocessor 108 in FIG. 1, generates a shuffled order utilizing the shuffling and sliding subgroup method according to various embodiments. In FIGs. 6 and 7, the data block array has a size of 15 data blocks (N = 15) with the data blocks at corresponding index positions (0, 1, ..., 14). However, it is appreciated that this number is an example and may thus be scalable to other quantities (e.g., larger than 15). FIG. 6 shows the shuffling and sliding subgroup mechanism based on a positive shift of one index position, and FIG. 7 shows the shuffling and sliding subgroup mechanism based on a negative shift of one index position.

Referring to the example shown in FIG. 6, the secure processor randomly selects the first value (E) and the second value (S) to be 3. For example, these values are randomly selected based on the size of the data block array (i.e., N=15) and based on the output of a RNG, such as RNG 106 in data processing system 100 of FIG. 1. It is appreciated that the selection of 3 for both of these values is an example since E can be any integer value between 0 and 15 (0 ≤ E <15) and S can be any integer value between 0 and 15 (0 < S < 15). Block 610 illustrates the method by which a secure processor executes a first iteration to generate a first subgroup 650 of data blocks in the shuffled order for executing data operations associated therewith. Based on the first value (E=3), the secure processor sets data block 3 as the first entry of the first subgroup 650. Then, the secure processor adds the subsequent entries (data blocks 6, 9, 12, 0) in the first subgroup 650 at steps 611, 613, 615, 617, respectively, based on a step size of 3 since S = 3. It is appreciated that step 617 has a step size of 3 from 12 to 0 based on modular reduction. The next entry (shown by dashed arrow 618) after data block 0 is added to the first subgroup 650 would be data block 3. However, the secure processor detects this next entry of data block 3 would be a repeat entry. Accordingly, the secure processor ends the addition of entries to the first subgroup 650 and triggers index shift 619. As shown in FIG. 5, first subgroup 650 includes a first subset of data blocks (3, 6, 9, 12, 0) from the plurality of data blocks as entries and, in some embodiments, the associated data operations are executed as the first subgroup 650 is generated.

Block 620 illustrates the method by which a secure processor executes a second iteration to generate a second subgroup 660 of data blocks in the shuffled order for executing data operations associated therewith. Based on the shifted index position shown by 619, the secure processor sets data block 4 as the first entry of the second subgroup. Then, the secure processor adds the subsequent entries (data blocks 7, 10, 13, 1) in the second subgroup 660 at steps 621, 623, 625, 627, respectively, based on the same step size (i.e., 3) used in the first iteration. The next entry (shown by dashed arrow 628) after data block 1 is added to the second subgroup 660 would be data block 4. However, the secure processor detects that this next entry of data block 4 would be a repeat entry. Accordingly, the secure processor ends the addition of entries to the second subgroup 660. As shown in FIG. 6, second subgroup 660 includes a second subset of data blocks (4, 7, 10, 13, 1) from the plurality of data blocks as entries and, in some embodiments, the associated data operations are executed as the second subgroup 660 is generated. Since the generated subgroups (first subgroup 650 and second subgroup 660 up to this point) do not include all of the data blocks of the plurality of data blocks, the secure processor triggers a third iteration based on index shift 629.

Block 630 illustrates the method by which a secure processor executes a third iteration to generate a third subgroup 670 of data blocks in the shuffled order for executing data operations associated therewith. Based on the shifted index position shown by 629, the secure processor sets data block 5 as the first entry of the third subgroup. Then, the secure processor adds subsequent entries (data blocks 8, 11, 14, 2) in the third subgroup 670 at steps 531, 533, 535, 537, respectively, based on the same step size (i.e., 3) used in the first and second iterations. The next entry (shown by dashed arrow 638) after data block 2 is added to the third subgroup 670 would be data block 5. However, the secure processor detects that this next entry of data block 5 would be a repeat entry. Accordingly, the secure processor ends the addition of entries to the third subgroup 670. As shown in FIG. 6, third subgroup 670 includes a third subset of data blocks (5, 8, 11, 14, 2) from the plurality of data blocks as entries and, in some embodiments, the associated data operations are executed as the third subgroup 670 is generated. In addition, the closing of the third subgroup 670 signals that all of the plurality of data blocks have been added to a respective subgroup to form the final shuffled order 680 that provides the order of executing the data operations associated with the plurality of data blocks.

It is appreciated that the permutation shown in shuffled order 680 is one permutation of many possible permutations covered by the shuffling and sliding subgroup method described herein. For example, in some embodiments, shuffled order 680 is one of a possible 15*(15-1)= 210 permutations according to the algorithms described in Shuffle 1 or Shuffle 3. In other embodiments, shuffled order 680 is one of 420 possible permutations covered by the shuffling and sliding subgroup method of the present disclosure when the additional feature of shifting the index position in either the positive or the negative direction is implemented (e.g., according to the algorithm described in Shuffle 2). Thus, this high number of possible permutations for the shuffled order 680 increases the resistance to side-channel attacks.

Referring to the example shown in FIG. 7, the secure processor randomly selects the first value (E) to be 0 and the second value (S) to be 3. For example, these values are randomly selected based on the size of the data block array (i.e., N=15) and based on the output of a RNG, such as RNG 106 in data processing system 100 of FIG. 1. It is appreciated that these values are examples and E can be any integer value between 0 and 15 (0 ≤ E <15) and S can be any integer value between 0 and 15 (0 < S < 15). Moreover, in the example shown in FIG. 7, the secure processor implements a negative shift for shifting the index position between the illustrated iterations. This negative shift, in some embodiments, is based on a random binary bit, B, such as discussed above in algorithm Shuffle 2.

Block 710 illustrates the method by which a secure processor executes a first iteration to generate the first subgroup 750 of data blocks in the shuffled order for executing data operations associated therewith. Based on the first value (E=0), the secure processor sets data block 0 as the first entry of the first subgroup 750. Then, the secure processor adds the subsequent entries (data blocks 3, 6, 9, 12) in the first subgroup 750 at steps 711, 713, 715, 717, respectively, based on a step size of 3 since S = 3. The next entry (shown by dashed arrow 718) after data block 12 is added to the first subgroup 750 would be data block 0. However, the secure processor detects this next entry of data block 0 would be a repeat entry. This closes the addition of entries to the first subgroup 750 and triggers index shift 719. As shown in FIG. 7, first subgroup 750 includes a first subset of data blocks (0, 3, 6, 9, 12) from the plurality of data blocks as entries and, in some embodiments, the associated data operations are executed as the first subgroup 750 is generated. And, in the example shown in FIG. 7, the index shift is by one position in the negative direction (i.e., shift = -1) to data block 14 based on modular reduction.

Block 720 illustrates the method by which a secure processor executes a second iteration to generate the second subgroup 760 of data blocks in the shuffled order for executing data operations associated therewith. Based on the shifted index position shown by 719, the secure processor sets data block 14 as the first entry of the second subgroup 760. Then, the secure processor adds the subsequent entries (data blocks 2, 5, 8, 11) in the second subgroup 760 at steps 721, 723, 725, 727, respectively, based on the same step size (i.e., 3) used in the first iteration. The next entry (shown by dashed arrow 728) after data block 11 is added to the second subgroup 760 would be data block 14. However, the secure processor detects that this next entry of data block 14 would be a repeat entry. Accordingly, the secure processor ends the addition of entries to the second subgroup 760. As shown in FIG. 7, second subgroup 760 includes a second subset of data blocks (14, 2, 5, 8, 11) from the plurality of data blocks as entries and, in some embodiments, the associated data operations are executed as the second subgroup 760 is generated. Since the generated subgroups (first subgroup 750 and second subgroup 760 up to this point) do not include all of the data blocks of the plurality of data blocks, a third iteration is triggered based on index shift 729. Since the first index shift 719 from the first iteration 710 to the second iteration 720 was by one index position in the negative direction, the index shift 729 from the second iteration 720 to the third iteration 730 remains the same (i.e., shift = -1).

Block 730 illustrates the method by which a secure processor executes a third iteration to generate a third subgroup 770 of data blocks in the shuffled order for executing data operations associated therewith. Based on the shifted index position shown by 729, the secure processor sets data block 13 as the first entry of the third subgroup 770. Then, the secure processor adds the subsequent entries (data blocks 1, 4, 7, 10) in the third subgroup 770 at steps 731, 733, 735, 737, respectively, based on the same step size used in the first and second iterations. The next entry (shown by dashed arrow 738) after data block 10 is added to the third subgroup 770 would be data block 13. However, the secure processor detects that this next entry of data block 13 would be a repeat entry. Accordingly, the secure processor ends the addition of entries to the third subgroup 770. As shown in FIG. 7, third subgroup 770 includes a third subset of data blocks (13, 1, 4, 7, 10) from the plurality of data blocks as entries and, in some embodiments, the associated data operations are executed as the third subgroup 770 is generated. The closing of the third subgroup 770 signals that all of the data blocks have been added to one of the generated subgroups to form the final shuffled order 780 that provides the order of executing the data operations associated with the plurality of data blocks.

It is appreciated that the permutation shown in shuffled order 780 is one permutation of many possible permutations covered by the shuffling and sliding subgroup method described herein. For example, in some embodiments, shuffled order 780 is one of 420 possible permutations covered by the shuffling and sliding subgroup method of the present disclosure when the additional feature of shifting the index position in either the positive or the negative direction is implemented (e.g., according to the algorithm described in Shuffle 2). Thus, this high number of possible permutations for the shuffled order 780 increases the resistance to side-channel attacks.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A computer-implemented method (200; 300) comprising:
selecting (204; 304) a first value (E) indicative of a starting index position and selecting (206; 306) a second value (S) indicative of a step size based on a plurality of data blocks associated with a set of data operations;
in a first iteration (208, 308), generating a first subgroup (317; 420; 650; 750) in a shuffled order (212) that includes entries associated with a first subset of data blocks of the plurality of data blocks by selecting, as a first entry, a data block having an index position corresponding to the first value (E), and adding additional entries having index positions that are offset from a previously added entry, based on the second value (S)and executing data operations associated with the first subgroup (317; 420; 650; 750);
upon detecting (311) that a next entry to be added to the first subgroup (317; 420; 650; 750) in the shuffled order would be a repeat entry, determining whether all data blocks in the plurality of data blocks have been added to the shuffled order (530); and
based on determining that all of the plurality of blocks have not been added to the shuffled order (530), triggering one or more subsequent iterations, each subsequent iteration to generate a subsequent subgroup added to the shuffled order (530) that includes entries associated with a different subset of data blocks of the plurality of data blocks that are generated by offsetting index positions based on the second value (S) and are shifted by one index position with respect to data blocks from a previously generated subgroup, and executing data operations associated with each of the subsequent subgroups.

2. The method (200; 300) of claim 1, further comprising, based on determining that all of the plurality of data blocks have been added to the shuffled order (530), terminating (220; 320) the method.

3. The method (200; 300) of claim 1 or 2, wherein the plurality of data blocks each have a unique index position according to an initial order of the plurality of data blocks.

4. The method (200; 300) of any preceding claim, wherein the first value (E) is a randomly selected integer value between zero and a number of the plurality of data blocks, and wherein the second value (S) is a second randomly selected integer value between one and the number of the plurality of data blocks.

5. The method (200; 300) of any preceding claim, wherein generating the first subgroup (317; 420; 650; 750) in the first iteration comprises:
selecting, as a first entry for the first subgroup (317; 420; 650; 750), a data block of the plurality of data blocks having an index position corresponding to the first value (E); and
adding, as additional entries to the first subgroup (317; 420; 650; 750), other data blocks of the plurality of data blocks with corresponding index positions that are offset from the first entry based on the second value (S).

6. The method (200; 300) of claim 5, where generating the first subgroup (317; 420; 650; 750) in the first iteration comprises:
detecting that a next entry to be added to the first subgroup (317; 420; 650; 750) corresponds to a repeat entry in the first subgroup (317; 420; 650; 750) and stopping the addition of entries to the first subgroup (317; 420; 650; 750).

7. The method (200; 300) of claim 6, further comprising triggering a second iteration, the second iteration belonging to the one or more subsequent iterations, by shifting an index position associated with the next entry by one index position, wherein the one index position is randomly selected to be in a negative index direction or in a positive index direction.

8. The method (200; 300) of claim 7, wherein generating a second subgroup (520; 660; 760) in the second generation comprises:
selecting, as a first entry for the second subgroup (520; 660; 760), a data block of the plurality of data blocks having an index position corresponding to shifted index position; and
adding, as additional entries to the second subgroup (520; 660; 760), other data blocks of the plurality of data blocks with corresponding index positions that are offset from the first entry of the second subgroup (520; 660; 760) based on the second value.

9. The method (200; 300) of claim 8, where generating the second subgroup (520; 660; 760) in the second iteration comprises:
detecting that a next entry to be added to the second subgroup (520; 660; 760) corresponds to a repeat entry in the second subgroup (520; 660; 760) and stopping the addition of entries to the second subgroup (520; 660; 760); and
determining whether all of the data blocks from the plurality of data blocks have been added as entries to the first subgroup (317; 420; 650; 750) or to the second subgroup (520; 660; 760).

10. The method (200; 300) of claim 9, wherein based on determining that all of the data blocks from the plurality of data blocks have not been added as entries to the first subgroup (317; 420; 650; 750) or to the second subgroup (520), triggering at least one further iteration, the at least one further iteration belonging to the one or more subsequent iterations, by shifting an index position associated with the next entry to be added to the second subgroup (520) by one index position.

11. A data processing system (100) comprising a processor (102) configured to:
select a first value (E) indicative of a starting index position and selecting a second value (S) indicative of a step size based on a plurality of data blocks associated with a set of data operations;
in a first iteration, generate a first subgroup (317; 420; 650; 750) in a shuffled order (530) that includes entries associated with a first subset of data blocks of the plurality of data blocks by selecting, as a first entry, a data block having an index position corresponding to the first value (E), and adding additional entries having index positions that are offset from a previously added entry, based on the second value (S), and execute data operations associated with the first subgroup (317; 420; 650; 750);
upon detecting that a next entry to be added to the first subgroup (317; 420; 650; 750) in the shuffled order (530) would be a repeat entry, determine whether all data blocks in the plurality of data blocks have been added to the shuffled order (530); and
based on determining that all of the plurality of blocks have not been added to the shuffled order (530), trigger one or more subsequent iterations, each subsequent iteration to generate a subsequent subgroup added to the shuffled order (530) that includes entries associated with a different subset of data blocks of the plurality of data blocks that are generated by offsetting index positions based on the second value (S) and are shifted by one index position with respect to data blocks from a previously generated subgroup, and execute data operations associated with each of the subsequent subgroups.

12. The data processing system (100) of claim 11, the processor (102) further configured to, based on determining that all of the plurality of data blocks have been added to the shuffled order (530), terminate adding entries to the shuffled order (530).

13. The data processing system (100) of claim 11 or 12, wherein the plurality of data blocks each have a unique index position according to an initial order of the plurality of data blocks, and wherein the first value (E) is a randomly selected integer value between zero and a number of the plurality of data blocks and the second value (S) is a second randomly selected integer value between one and the number of the plurality of data blocks.

14. The data processing system (100) of claim 13, the processor (102) configured to:
select, as a first entry for the first subgroup (317; 420; 650; 750), a data block of the plurality of data blocks having an index position corresponding to the first value (E);
add, as additional entries to the first subgroup (317; 420; 650; 750), other data blocks of the plurality of data blocks with corresponding index positions that are offset from the first entry based on the second value (S);
detect that a next entry to be added to the first subgroup (317; 420; 650; 750) corresponds to a repeat entry in the first subgroup (317; 420; 650; 750) and stop the addition of entries to the first subgroup (317; 420; 650; 750); and
trigger a second iteration, the second iteration belonging to the one or more subsequent iterations, by shifting an index position associated with the next entry by one index position.

15. A non-transitory computer readable medium (104, 110) storing a set of executable instructions, the set of executable instructions to manipulate at least one processor to carry out the method of any one of claims 1 to 10.

## Patentansprüche

1. Computerimplementiertes Verfahren (200; 300), umfassend:
Auswählen (204; 304) eines ersten Werts (E), der eine Indexstartposition angibt, und Auswählen (206; 306) eines zweiten Werts (S), der eine Schrittgröße angibt, basierend auf mehreren Datenblöcken, die mit einem Satz von Datenoperationen assoziiert sind;
in einer ersten Iteration (208, 308) Erzeugen einer ersten Untergruppe (317; 420; 650; 750) in einer gemischten Reihenfolge (212), die Einträge beinhaltet, die mit einer ersten Teilmenge von Datenblöcken der mehreren Datenblöcke assoziiert sind, durch Auswählen eines Datenblocks mit einer Indexposition, die dem ersten Wert (E) entspricht, als ersten Eintrag und Hinzufügen zusätzlicher Einträge mit Indexpositionen, die von einem zuvor hinzugefügten Eintrag versetzt sind, basierend auf dem zweiten Wert (S) und Ausführen von Datenoperationen, die mit der ersten Untergruppe (317; 420; 650; 750) assoziiert sind;
bei Erkennen (311), dass ein nächster Eintrag, der zu der ersten Untergruppe (317; 420; 650; 750) in der gemischten Reihenfolge hinzugefügt werden soll, ein wiederholter Eintrag wäre, Bestimmen, ob alle Datenblöcke der mehreren Datenblöcke zu der gemischten Reihenfolge (530) hinzugefügt wurden; und
basierend auf einem Bestimmen, dass nicht alle der mehreren Blöcke zu der gemischten Reihenfolge (530) hinzugefügt wurden, Auslösen einer oder mehrerer nachfolgender Iterationen, wobei jede nachfolgende Iteration eine nachfolgende Untergruppe erzeugt, die zu der gemischten Reihenfolge (530) hinzugefügt wird und Einträge beinhaltet, die mit einer anderen Teilmenge von Datenblöcken der mehreren Datenblöcke assoziiert sind, die durch Versetzen von Indexpositionen basierend auf dem zweiten Wert (S) erzeugt und um eine Indexposition in Bezug auf Datenblöcke aus einer zuvor erzeugten Untergruppe verschoben werden, und Ausführen von Datenoperationen, die mit jeder der nachfolgenden Untergruppen assoziiert sind.

2. Verfahren (200; 300) nach Anspruch 1, ferner umfassend Beenden (220; 320) des Verfahrens basierend auf dem Bestimmen, dass alle der mehreren Datenblöcke zu der gemischten Reihenfolge (530) hinzugefügt wurden.

3. Verfahren (200; 300) nach Anspruch 1 oder 2, wobei die mehreren Datenblöcke jeweils eine eindeutige Indexposition gemäß einer anfänglichen Reihenfolge der mehreren Datenblöcke aufweisen.

4. Verfahren (200; 300) nach einem der vorhergehenden Ansprüche, wobei der erste Wert (E) ein zufällig ausgewählter ganzzahliger Wert zwischen null und einer Anzahl der mehreren Datenblöcke ist und wobei der zweite Wert (S) ein zweiter zufällig ausgewählter ganzzahliger Wert zwischen eins und der Anzahl der mehreren Datenblöcke ist.

5. Verfahren (200; 300) nach einem der vorhergehenden Ansprüche, wobei das Erzeugen der ersten Untergruppe (317; 420; 650; 750) in der ersten Iteration Folgendes umfasst:
Auswählen eines Datenblocks der mehreren Datenblöcke mit einer Indexposition, die dem ersten Wert (E) entspricht, als ersten Eintrag für die erste Untergruppe (317; 420; 650; 750); und
Hinzufügen anderer Datenblöcke der mehreren Datenblöcke mit entsprechenden Indexpositionen, die von dem ersten Eintrag versetzt sind, basierend auf dem zweiten Wert (S) als zusätzliche Einträge zu der ersten Untergruppe (317; 420; 650; 750).

6. Verfahren (200; 300) nach Anspruch 5, wobei das Erzeugen der ersten Untergruppe (317; 420; 650; 750) in der ersten Iteration Folgendes umfasst:
Erkennen, dass ein nächster Eintrag, der zu der ersten Untergruppe (317; 420; 650; 750) hinzugefügt werden soll, einem wiederholten Eintrag in der ersten Untergruppe (317; 420; 650; 750) entspricht, und Stoppen des Hinzufügens von Einträgen zu der ersten Untergruppe (317; 420; 650; 750).

7. Verfahren (200; 300) nach Anspruch 6, ferner umfassend Auslösen einer zweiten Iteration, wobei die zweite Iteration zu der einen oder den mehreren nachfolgenden Iterationen gehört, durch Verschieben einer Indexposition, die mit dem nächsten Eintrag assoziiert ist, um eine Indexposition, wobei die eine Indexposition zufällig so ausgewählt wird, dass sie sich in einer negativen Indexrichtung oder in einer positiven Indexrichtung befindet.

8. Verfahren (200; 300) nach Anspruch 7, wobei das Erzeugen einer zweiten Untergruppe (520; 660; 760) in der zweiten Erzeugung Folgendes umfasst:
Auswählen eines Datenblocks der mehreren Datenblöcke mit einer Indexposition, die einer verschobenen Indexposition entspricht, als ersten Eintrag für die zweite Untergruppe (520; 660; 760); und
Hinzufügen anderer Datenblöcke der mehreren Datenblöcke mit entsprechenden Indexpositionen, die von dem ersten Eintrag der zweiten Untergruppe (520; 660; 760) versetzt sind, basierend auf dem zweiten Wert als zusätzliche Einträge zu der zweiten Untergruppe (520; 660; 760).

9. Verfahren (200; 300) nach Anspruch 8, wobei das Erzeugen der zweiten Untergruppe (520; 660; 760) in der zweiten Iteration Folgendes umfasst:
Erkennen, dass ein nächster Eintrag, der zu der zweiten Untergruppe (520; 660; 760) hinzugefügt werden soll, einem wiederholten Eintrag in der zweiten Untergruppe (520; 660; 760) entspricht, und Stoppen des Hinzufügens von Einträgen zu der zweiten Untergruppe (520; 660; 760); und
Bestimmen, ob alle Datenblöcke aus den mehreren Datenblöcken als Einträge zu der ersten Untergruppe (317; 420; 650; 750) oder zu der zweiten Untergruppe (520; 660; 760) hinzugefügt wurden.

10. Verfahren (200; 300) nach Anspruch 9, wobei basierend auf einem Bestimmen, dass nicht alle Datenblöcke aus den mehreren Datenblöcken als Einträge zu der ersten Untergruppe (317; 420; 650; 750) oder zu der zweiten Untergruppe (520) hinzugefügt wurden, Auslösen mindestens einer weiteren Iteration, wobei die mindestens eine weitere Iteration zu der einen oder den mehreren nachfolgenden Iterationen gehört, durch Verschieben einer Indexposition, die mit dem nächsten Eintrag assoziiert ist, der zu der zweiten Untergruppe (520) hinzugefügt werden soll, um eine Indexposition.

11. Datenverarbeitungssystem (100), umfassend einen Prozessor (102), der zu Folgendem konfiguriert ist:
Auswählen eines ersten Werts (E), der eine Indexstartposition angibt, und Auswählen eines zweiten Werts (S), der eine Schrittgröße angibt, basierend auf mehreren Datenblöcken, die mit einem Satz von Datenoperationen assoziiert sind;
in einer ersten Iteration Erzeugen einer ersten Untergruppe (317; 420; 650; 750) in einer gemischten Reihenfolge (530), die Einträge beinhaltet, die mit einer ersten Teilmenge von Datenblöcken der mehreren Datenblöcke assoziiert sind, durch Auswählen eines Datenblocks mit einer Indexposition, die dem ersten Wert (E) entspricht, als ersten Eintrag und Hinzufügen zusätzlicher Einträge mit Indexpositionen, die von einem zuvor hinzugefügten Eintrag versetzt sind, basierend auf dem zweiten Wert (S) und Ausführen von Datenoperationen, die mit der ersten Untergruppe (317; 420; 650; 750) assoziiert sind;
bei Erkennen, dass ein nächster Eintrag, der zu der ersten Untergruppe (317; 420; 650; 750) in der gemischten Reihenfolge (530) hinzugefügt werden soll, ein wiederholter Eintrag wäre, Bestimmen, ob alle Datenblöcke der mehreren Datenblöcke zu der gemischten Reihenfolge (530) hinzugefügt wurden; und
basierend auf einem Bestimmen, dass nicht alle der mehreren Blöcke zu der gemischten Reihenfolge (530) hinzugefügt wurden, Auslösen einer oder mehrerer nachfolgender Iterationen, wobei jede nachfolgende Iteration eine nachfolgende Untergruppe erzeugt, die zu der gemischten Reihenfolge (530) hinzugefügt wird und Einträge beinhaltet, die mit einer anderen Teilmenge von Datenblöcken der mehreren Datenblöcke assoziiert sind, die durch Versetzen von Indexpositionen basierend auf dem zweiten Wert (S) erzeugt und um eine Indexposition in Bezug auf Datenblöcke von einer zuvor erzeugten Untergruppe verschoben werden, und Ausführen von Datenoperationen, die mit jeder der nachfolgenden Untergruppen assoziiert sind.

12. Datenverarbeitungssystem (100) nach Anspruch 11, wobei der Prozessor (102) ferner dazu konfiguriert ist, basierend auf einem Bestimmen, dass alle der mehreren Datenblöcke zu der gemischten Reihenfolge (530) hinzugefügt wurden, das Hinzufügen von Einträgen zu der gemischten Reihenfolge (530) zu beenden.

13. Datenverarbeitungssystem (100) nach Anspruch 11 oder 12, wobei die mehreren Datenblöcke jeweils eine eindeutige Indexposition gemäß einer anfänglichen Reihenfolge der mehreren Datenblöcke aufweisen und wobei der erste Wert (E) ein zufällig ausgewählter ganzzahliger Wert zwischen null und einer Anzahl der mehreren Datenblöcke ist und der zweite Wert (S) ein zweiter zufällig ausgewählter ganzzahliger Wert zwischen eins und der Anzahl der mehreren Datenblöcke ist.

14. Datenverarbeitungssystem (100) nach Anspruch 13, wobei der Prozessor (102) zu Folgendem konfiguriert ist:
Auswählen eines Datenblocks der mehreren Datenblöcke mit einer Indexposition, die dem ersten Wert (E) entspricht, als ersten Eintrag für die erste Untergruppe (317; 420; 650; 750);
Hinzufügen anderer Datenblöcke der mehreren Datenblöcke mit entsprechenden Indexpositionen, die von dem ersten Eintrag versetzt sind, basierend auf dem zweiten Wert (S) als zusätzliche Einträge zu der ersten Untergruppe (317; 420; 650; 750);
Erkennen, dass ein nächster Eintrag, der zu der ersten Untergruppe (317; 420; 650; 750) hinzugefügt werden soll, einem wiederholten Eintrag in der ersten Untergruppe (317; 420; 650; 750) entspricht, und Stoppen des Hinzufügens von Einträgen zu der ersten Untergruppe (317; 420; 650; 750); und
Auslösen einer zweiten Iteration, wobei die zweite Iteration zu der einen oder den mehreren nachfolgenden Iterationen gehört, durch Verschieben einer Indexposition, die mit dem nächsten Eintrag assoziiert ist, um eine Indexposition.

15. Nichtflüchtiges computerlesbares Medium (104, 110), das einen Satz ausführbarer Anweisungen speichert, wobei der Satz ausführbarer Anweisungen dazu dient, mindestens einen Prozessor zu manipulieren, um das Verfahren nach einem der Ansprüche 1 bis 10 durchzuführen.

## Revendications

1. Procédé (200 ; 300) mis en œuvre par ordinateur comprenant les étapes suivantes :
sélectionner (204 ; 304) une première valeur (E) indicative d'une position de l'index de départ et sélectionner (206 ; 306) une deuxième valeur (S) indicative d'une taille de pas sur la base d'une pluralité de blocs de données associés à un ensemble d'opérations de données ;
lors d'une première itération (208, 308), générer un premier sous-groupe (317 ; 420 ; 650 ; 750) dans un ordre réorganisé (212) qui comprend des entrées associées à un premier sous-ensemble de blocs de données de la pluralité de blocs de données en sélectionnant, comme première entrée, un bloc de données ayant une position d'index correspondant à la première valeur (E), et en ajoutant des entrées supplémentaires ayant des positions d'index décalées par rapport à une entrée ajoutée précédemment, sur la base de la deuxième valeur (S) et en exécutant des opérations de données associées au premier sous-groupe (317 ; 420 ; 650 ; 750) ;
lorsque l'on détecte (311) qu'une entrée suivante à ajouter au premier sous-groupe (317 ; 420 ; 650 ; 750) dans l'ordre de mélange serait une entrée répétée, il est déterminé si tous les blocs de données de la pluralité de blocs de données ont été ajoutés à l'ordre de mélange (530) ; et
sur la base de la détermination que tous les blocs de la pluralité de blocs n'ont pas été ajoutés à l'ordre de mélange (530), déclencher une ou plusieurs itérations ultérieures, chaque itération suivante permettant de générer un sous-groupe ultérieur ajouté à l'ordre de mélange (530) qui comprend des entrées associées à un sous-ensemble différent de blocs de données de la pluralité de blocs de données qui sont générés par décalage des positions d'index sur la base de la deuxième valeur (S) et sont décalés d'une position d'index par rapport aux blocs de données d'un sous-groupe précédemment généré, et exécuter des opérations de données associées à chacun des sous-groupes suivants.

2. Procédé (200 ; 300) selon la revendication 1, comprenant en outre, sur la base de la détermination du fait que tous les blocs de la pluralité de blocs de données ont été ajoutés à l'ordre de mélange (530), de mettre fin (220 ; 320) au procédé.

3. Procédé (200 ; 300) selon la revendication 1 ou la revendication 2, dans lequel la pluralité de blocs de données ont chacun une position d'index unique selon un ordre initial de la pluralité de blocs de données.

4. Procédé (200 ; 300) selon l'une quelconque des revendications précédentes, dans lequel la première valeur (E) est une valeur entière sélectionnée aléatoirement entre zéro et le nombre de la pluralité de blocs de données, et dans lequel la deuxième valeur (S) est une deuxième valeur entière sélectionnée aléatoirement entre un et le nombre de la pluralité de blocs de données.

5. Procédé (200 ; 300) selon l'une quelconque des revendications précédentes, dans lequel la génération du premier sous-groupe (317 ; 420 ; 650 ; 750) dans la première itération comprend les étapes suivantes :
sélectionner, en tant que première entrée pour le premier sous-groupe (317 ; 420 ; 650 ; 750), un bloc de données de la pluralité de blocs de données ayant une position d'index correspondant à la première valeur (E) ; et
ajouter, en tant qu'entrées supplémentaires au premier sous-groupe (317 ; 420 ; 650 ; 750), d'autres blocs de données de la pluralité de blocs de données avec des positions d'index correspondantes qui sont décalées par rapport à la première entrée sur la base de la deuxième valeur (S).

6. Procédé (200 ; 300) selon la revendication 5, dans lequel la génération du premier sous-groupe (317 ; 420 ; 650 ; 750) dans la première itération comprend les étapes suivantes :
détecter qu'une entrée suivante à ajouter au premier sous-groupe (317 ; 420 ; 650 ; 750) correspond à une entrée répétée dans le premier sous-groupe (317 ; 420 ; 650 ; 750) et arrêter l'ajout d'entrées au premier sous-groupe (317 ; 420 ; 650 ; 750).

7. Procédé (200 ; 300) selon la revendication 6, comprenant en outre de déclencher une deuxième itération, la deuxième itération appartenant aux une ou plusieurs itérations suivantes, en décalant une position d'index associée à l'entrée suivante d'une position d'index, où la position d'index est sélectionnée de façon aléatoire pour être dans une direction d'index négative ou dans une direction d'index positive.

8. Procédé (200 ; 300) selon la revendication 7, dans lequel la génération d'un deuxième sous-groupe (520 ; 660 ; 760) dans la deuxième génération comprend les étapes suivantes :
sélectionner, en tant que première entrée pour le deuxième sous-groupe (520 ; 660 ; 760), un bloc de données de la pluralité de blocs de données ayant une position d'index correspondant à une position d'index décalée ; et
ajouter, en tant qu'entrées supplémentaires au deuxième sous-groupe (520 ; 660 ; 760), d'autres blocs de données de la pluralité de blocs de données avec des positions d'index correspondantes qui sont décalées par rapport à la première entrée du deuxième sous-groupe (520 ; 660 ; 760) sur la base de la deuxième valeur.

9. Procédé (200 ; 300) selon la revendication 8, dans lequel la génération du deuxième sous-groupe (520 ; 660 ; 760) dans la deuxième itération comprend les étapes suivantes :
détecter qu'une entrée suivante à ajouter au deuxième sous-groupe (520 ; 660 ; 760) correspond à une entrée répétée dans le deuxième sous-groupe (520 ; 660 ; 760) et arrêter l'ajout d'entrées au deuxième sous-groupe (520 ; 660 ; 760) ; et
déterminer si tous les blocs de données de la pluralité de blocs de données ont été ajoutés en tant qu'entrées au premier sous-groupe (317 ; 420 ; 650 ; 750) ou au deuxième sous-groupe (520 ; 660 ; 760).

10. Procédé (200 ; 300) selon la revendication 9, dans lequel, sur la base de la détermination que tous les blocs de données de la pluralité de blocs de données n'ont pas été ajoutés en tant qu'entrées au premier sous-groupe (317 ; 420 ; 650 ; 750) ou au deuxième sous-groupe (520), déclencher au moins une itération supplémentaire, l'au moins une itération supplémentaire appartenant aux une ou plusieurs itérations suivantes, par décalage de la position d'index d'une position d'index associée à l'entrée suivante à ajouter au deuxième sous-groupe (520).

11. Système de traitement de données (100) comprenant un processeur (102) configuré pour :
sélectionner une première valeur (E) indicative d'une position de l'index de départ et sélectionner une deuxième valeur (S) indicative d'une taille de pas sur la base d'une pluralité de blocs de données associés à un ensemble d'opérations de données ;
lors d'une première itération, générer un premier sous-groupe (317 ; 420 ; 650 ; 750) dans un ordre réorganisé (530) qui comprend des entrées associées à un premier sous-ensemble de blocs de données de la pluralité de blocs de données en sélectionnant, comme première entrée, un bloc de données ayant une position d'index correspondant à la première valeur (E), et ajouter des entrées supplémentaires ayant des positions d'index décalées par rapport à une entrée ajoutée précédemment, sur la base de la deuxième valeur (S) et exécuter des opérations de données associées au premier sous-groupe (317 ; 420 ; 650 ; 750) ;
lorsque l'on détecte qu'une entrée suivante à ajouter au premier sous-groupe (317 ; 420 ; 650 ; 750) dans l'ordre de mélange (530) serait une entrée répétée, déterminer si tous les blocs de données de la pluralité de blocs de données ont été ajoutés à l'ordre de mélange (530) ; et
sur la base de la détermination que tous les blocs de la pluralité de blocs n'ont pas été ajoutés à l'ordre de mélange (530), déclencher une ou plusieurs itérations ultérieures, chaque itération suivante permettant de générer un sous-groupe ultérieur ajouté à l'ordre de mélange (530) qui comprend des entrées associées à un sous-ensemble différent de blocs de données de la pluralité de blocs de données qui sont générés par décalage des positions d'index sur la base de la deuxième valeur (S) et sont décalés d'une position d'index par rapport aux blocs de données d'un sous-groupe précédemment généré, et exécuter des opérations de données associées à chacun des sous-groupes suivants.

12. Système de traitement de données (100) selon la revendication 11, le processeur (102) étant en outre configuré pour, sur la base de la détermination du fait que tous les blocs de données de la pluralité de blocs de données ont été ajoutés à l'ordre de mélange (530), mettre fin à l'ajout d'entrées à l'ordre de mélange (530) .

13. Système de traitement de données (100) selon la revendication 11 ou la revendication 12, dans lequel la pluralité de blocs de données ont chacun une position d'index unique selon un ordre initial de la pluralité de blocs de données, et où la première valeur (E) est une valeur entière sélectionnée de manière aléatoire entre zéro et le nombre de la pluralité de blocs de données et la deuxième valeur (S) est une deuxième valeur entière sélectionnée de manière aléatoire entre un et le nombre de blocs de données.

14. Système de traitement de données (100) selon la revendication 13, dans lequel le processeur (102) est configuré pour :
sélectionner, en tant que première entrée pour le premier sous-groupe (317 ; 420 ; 650 ; 750), un bloc de données de la pluralité de blocs de données ayant une position d'index correspondant à la première valeur (E) ;
ajouter, en tant qu'entrées supplémentaires au premier sous-groupe (317 ; 420 ; 650 ; 750), d'autres blocs de données de la pluralité de blocs de données avec des positions d'index correspondantes qui sont décalées par rapport à la première entrée sur la base de la deuxième valeur (S) ;
détecter qu'une entrée suivante à ajouter au premier sous-groupe (317 ; 420 ; 650 ; 750) correspond à une entrée répétée dans le premier sous-groupe (317 ; 420 ; 650 ; 750) et arrêter l'ajout d'entrées au premier sous-groupe (317 ; 420 ; 650 ; 750) ; et
déclencher une deuxième itération, la deuxième itération appartenant aux une ou plusieurs itérations suivantes, en décalant une position d'index associée à l'entrée suivante d'une position d'index.

15. Support non transitoire lisible par ordinateur (104, 110) stockant un ensemble d'instructions exécutables, l'ensemble d'instructions exécutables commandant au moins un processeur pour mettre en œuvre le procédé selon l'une quelconque des revendications 1 à 10.
